# EUROPÄISCHE PATENTSCHRIFT

(11) **EP 1 040 867 B1**
(45) Veröffentlichungstag und Bekanntmachung des Hinweises auf die Patenterteilung: **09.08.2006**
(21) Anmeldenummer: 00106284.3
(22) Anmeldetag: 23.03.2000
(51) Int. Cl.: B01J 8/08, B01J 8/10, B01J 8/12, B01J 8/18, B01J 8/24, B01J 8/26, B01J 8/36, C08F 4/24

(54) **Verfahren und Vorrichtung zur kontinuierlichen Behandlung von Katalysatoren und Katalysatorträgern**
Process and apparatus for the continuous treatment of catalysts and catalyst carriers
Procédé et dispositif pour le traitement en continu de catalyseurs et supports de catalyseurs

(30) Priorität: 31.03.1999 DE 19914751
(43) Veröffentlichungstag der Anmeldung: 04.10.2000
(73) Patentinhaber: Basell Polyolefine GmbH, 50389 Wesseling (DE)
(72) Erfinder: Feindt, Hans-Jacob, Dr., Flemington, NJ 08822-6930 (US); Karer, Rainer, 67657 Kaiserslautern (DE); Rosendorfer, Philipp, Dr., 67434 Neustadt (DE); Evertz, Kaspar, Dr., 65843 Sulzbach/Taunus (DE); Micklitz, Wolfgang, Dr., 67434 Neustadt (DE); De Lange, Paulus, Dr., 50389 Wesseling (DE)

(56) Entgegenhaltungen:
- DE-A- 3 820 947
- GB-A- 849 929
- US-A- 3 953 175
- US-A- 5 356 845
- US-A- 5 455 216

## Beschreibung

Die Erfindung betrifft ein Verfahren zur kontinuierlichen Behandlung von Katalysatoren und Katalysatorträgern und die Verwendung der Verfahrensprodukte bei der Polyolefinherstellung.

Im folgenden sollen Verfahren zur Behandlung von Katalysatoren, Initiatoren, Katalysatorträgern, Initiatorträgern und von mit Initiatoren oder Katalysatoren behandelten Trägermaterialien betrachtet werden. Obwohl streng definitionsgemäß zwischen Initiatoren und Katalysatoren differenziert werden muß, sind nachstehend unter Katalysatoren auch Initiatoren zu verstehen. Häufig ist nur schwer erkennbar, ob eine Reaktion initiert oder katalysiert wird. Entsprechend werden im folgenden mit aktiven Komponenten - zum Beispiel Katalysatoren - behandelte Trägermaterialien auch als Katalysatoren bezeichnet.

Die Behandlung von Katalysatoren oder Katalysatorträgern geschieht in der Regel entweder in Form von Kalzinierung oder Aktivierung. In der Technik werden meist zur Durchführung der Behandlung von als Partikeln vorliegenden Katalysatoren oder Katalysatorträgern diskontinuierliche Wirbelschichtverfahren eingesetzt.

Zur Behandlung von Katalysatorträgern oder Katalysatoren, zum Beispiel für deren Einsatz in der Olefinpolymerisation, werden dann in der Regel solche Wirbelschichtreaktoren verwendet, bei denen die Partikeln durch einen nach oben gerichteten Gasstrom bewegt werden, mit dem diese in intensivem Stoff- und Wärmeaustausch stehen. Meist werden die Partikeln im zeitlichen Verlauf des Prozesses aufgeheizt und unterliegen einer physikalisch/chemischen Veränderung. Nach Beendigung der Umwandlung werden die Partikeln abgekühlt und aus dem Reaktor entladen.

Ein häufig auftretendes Problem bei solchen Verfahren ist die Feinstaubbildung, die insbesondere auf die Zerkleinerung von Partikeln zurückzuführen ist. Feinstaubbildung verhindert die Bildung von Material einheitlicher Qualität -einheitliche Qualität ist jedoch meist erwünscht.

Vorstehend beschriebene, diskontinuierlich betriebene Wirbelschichtreaktoren sind aufgrund der Notwendigkeit eines hinreichenden Fassungsvermögens in der industriellen Praxis meist von beträchtlicher Größe (typische Größenordnung des Innenvolumens ca. 10³ m³), da ein Wirbelbett vergleichsweise nur wenig Feststoff pro Volumeneinheit aufnehmen kann. Der Materialaufwand für die Konstruktion der Reaktoren ist somit entsprechend hoch. Andererseits bedingt die große Masse der Wirbelbettreaktoren lange Aufheiz- und Abkühlperioden, die mit der Behandlung verbunden sind. Die Aufheiz-, Abkühlvorgänge verursachen einerseits einen hohen Energieaufwand und begünstigen andererseits den Verschleiß des Reaktors durch Materialermüdung.

Die GB-A- 849 929 beschreibt ein Verfahren zur Aktivierung von (u.a.) OlefinPolymerisationskatalysatoren. Dort wird aber ausdrücklich auf eine Vorgehensweise Bezug genommen, nach der nach der Beladung Aufheiz und vor der Entladung Abkühlperioden vorgesehen sind.

Der Erfindung liegt deshalb die Aufgabe zugrunde, das vorstehend beschriebene Verfahren zur Behandlung von Katalysatoren oder Katalysatorträgern so zu verbessern, daß Partikeln gleichmäßigerer Qualität erzeugt werden, der apparative Aufwand reduziert wird, und daß Aufheiz- und Abkühlperioden verkürzt werden.

Gelöst wird die Aufgabe durch ein Verfahren zur Behandlung von Katalysatoren Katalysatoren auf der Basis oxidischer Verbindungen oder oxidischen Katalysatorträgern in einer Vorrichtung, die kontinuierlich auf Temperaturen von 400 bis 800 °C gehalten wird, wobei der Katalysator oder der Katalysatorträger in die Vorrichtung eingeführt, behandelt und aus ihr wieder abgezogen wird, ohne daß dabei Abkühl- und Aufheizperioden in der Vorrichtung anfallen und der Katalysator oder der Katalysatorträger in der Vorrichtung durch Zonen unterschiedlicher physikalischer und/oder chemischer Bedingungen transportiert wird.

Die kontinuierliche Behandlung der Katalysatoren oder der Katalysatorträger kann prinzipiell auf beliebige Art erfolgen. Typisch für alle Verfahren ist, daß die Katalysatoren oder Katalysatorträger in der Vorrichtung durch Zonen befördert werden, in denen verschiedene physikalische und/oder chemische Bedingungen vorliegen, wobei die einzelnen Verfahren sich zumeist durch die Art und Weise der Beförderung unterscheiden. Unter physikalischen Bedingungen versteht man in diesem Zusammenhang insbesondere die Temperatur, den Druck sowie Strömungsverhältnisse, während man mit chemischen Bedingungen insbesondere die auf die Katalysatoren oder Katalysatorträger einwirkende Gase, Flüssigkeiten oder Feststoffe meint. Die physikalischen und/oder chemischen Bedingungen können sich kontinuierlich, oder eher sprunghaft ändern. Die verschiedenen Zonen in der Vorrichtung oder die nur eine Zone entsprechen im Prinzip den Behandlungsstufen des entsprechenden diskontinuierlichen Verfahrens. Katalysator oder Katalysatorträger durchlaufen während der Behandlung die vorgesehene Abfolge der entsprechenden Zonen. Im Idealfall wird eine besonders einheitliche Qualität erzeugt. Dann findet keine Rückvermischung statt, und die Verweilzeiten in den einzelnen Zonen sind konstant.

Eine kontinuierliche Betriebsweise hat gegenüber einer diskontinuierlichen den Vorteil, daß die Raum-Zeit-Ausbeute der Behandlung höher ist. Somit kann die Größe der Vorrichtung zur Behandlung der Katalysatoren oder Katalysatorträger bei einem kontinuierlichen Verfahren deutlich reduziert werden. Eine kleinere Vorrichtung bedeutet weniger Materialaufwand und somit Kostenersparnis.

Ein weiterer Vorteil des kontinuierlichen Behandlungsverfahrens besteht darin, daß Abkühl- und Aufheizperioden entfallen. Dies bedingt einerseits die vergleichsweise höheren Raum-Zeit-Ausbeuten. Anderseits wird der Energieaufwand des Verfahrens reduziert und außerdem wird einem Verschleiß der verwendeten Apparatur durch Materialermüdung entgegengewirkt. Überraschend ist, daß bei der schnellen Abkühlung und/oder Aufheizung die behandelten Katalysator- oder Katalysatorträger-Partikeln nicht beschädigt werden, so daß keine Feinstaubbildung mit der kontinuierlichen Behandlung einhergeht. Es kann somit zumindest zum Teil auf Abscheideorgane verzichtet werden.

Von besonderer Bedeutung ist, daß beim kontinuierlichen im Vergleich zum diskontinuierlichen Behandlungsverfahren Material gleichmäßigerer Qualität erzeugt wird. In der Regel haben verschiedene Chargen, die dem gleichen diskontinuierlichen Behandlungsverfahren zugrundeliegen, untereinander uneinheitliche Qualität. Bei diskontinuierlichen Verfahren ist demgemäß nicht nur die Gleichmäßigkeit der Qualität innerhalb einer Charge, sondern vielmehr auch die zwischen verschiedenen Chargen zu prüfen.

Bei den verschiedenen Beförderungsmethoden der Katalysatoren oder der Katalysatorträger durch Zonen oder die nur eine Zone der Vorrichtung kann zwischen der Beförderung in einer Wirbelschicht und in einer Schüttung unterschieden werden.

Bei der Beförderung in einer Wirbelschicht wird in der Regel auch der Katalysator oder der Katalysatorträger in der Wirbelschicht behandelt. Vorzugsweise wird die den Katalysator oder Katalysatorträger enthaltende Wirbelschicht in der Vorrichtung durch Zonen befördert, in denen verschiedene physikalische und/oder chemische Bedingungen vorliegen. Die den Katalysator oder Katalysatorträger enthaltende Wirbelschicht kann alternativ auch nur durch eine Zone befördert werden, in der dann einheitliche physikalische und/oder chemische Bedingungen vorliegen.

Das zu behandelnde Material kann auch in einer Schüttung transportiert werden. Der Katalysator oder Katalysatorträger wird dann in der Regel während der Beförderung in der Schüttung behandelt. Dabei wird bevorzugt die den Katalysator oder Katalysatorträger enthaltende Schüttung mit Hilfe einer Fördervorrichtung durch Zonen (im Grenzfall auch nur durch eine Zone) befördert, in denen verschiedene physikalische und/oder chemische Bedingungen vorliegen. Die Fördervorrichtung kann beispielsweise ein Förderband und/oder ein Drehrohr und/oder einen Drehteller und/oder ein unbewegliches, senkrechtes Rohr mit fixierten Einbauten aufweisen.

Die im erfindungsgemäßen Verfahren behandelten Katalysatoren oder Katalysatorträger werden bei der Olefinpolymerisation eingesetzt, wobei die zu behandelnden Partikeln in der Regel in Form von festen Partikeln dem Reaktor zugeführt werden. Solche Polyolefin-Katalysatoren enthalten häufig dotierte Trägermaterialien (zum Beispiel auf der Basis von Kieselgel). Als Aktivkomponenten dienen dabei zum Beispiel Übergangsmetalle wie Chrom oder Titan. Die Trägermaterialien sind oxidische Verbindungen, wie Silika, Alumina, Silika-Alumina, Zirkonia, Thoria, fluoriertes Silika, fluoriertes Alumina, fluoriertes Silika-Alumina, Boroxide oder deren Mischungen sein. Eine zusätzliche Oberflächenmodifikation der Trägermaterialien kann besonders vorteilhaft sein. Die Behandlung der Katalysatoren oder der Katalysatorträger ist in der Regel eine Kalzinierung und/oder Aktivierung.

Während der Behandlung können (neben dem Trägergas bei Wirbelschichtverfahren) auch zusätzliche Gase und neben den ursprünglich vorgelegten Partikeln auch zusätzlicher Feststoff mit in die Wirbelschicht oder in die Schüttung eingebracht werden. Diese Einbringung kann jederzeit an beliebigen Orten an angebrachten Zufuhrstellen erfolgen. Als zusätzliche Gase kommen beispielsweise Sauerstoff, Kohlendioxid, Chromylchlorid (oder auch andere aktive Komponenten) oder Wasserdampf in Frage, während als zusätzliche Feststoffe beispielsweise Ammoniumhexafluorosilikat, unbehandelter Katalysatorträger oder Katalysatoren anderer physikalisch/chemischer Struktur eingesetzt werden können. Außerdem können jederzeit an beliebigen Zufuhrstellen auch Flüssigkeiten, beispielsweise Wasser, in die Wirbelschicht oder auf die Schüttung eingesprüht werden. Somit können Flüssigkeiten, zusätzliche Feststoffe und/oder zusätzliche Gase bei der Behandlung eingesetzt werden.

Prinzipiell können nach dem erfindungsgemäßen Verfahren auch Katalysatoren oder Katalysatorträger behandelt werden, die nicht in Form von Partikeln (dann liegt weder eine Wirbelschicht noch eine Schüttung vor), sondern zum Beispiel in Form von festen Blöcken vorliegen. In einem solchen Fall ist in der Regel der Einsatz einer geeigneten Fördervorrichtung, wie zum Beispiel des eines Förderbandes, zweckmäßig.

Es zeigen:
Fig. 1 ein skizzenhaft vereinfachter Querschnitt durch eine verschiedene Wirbelschichten enthaltende Vorrichtung;
Fig. 2 eine Querschnittsskizze einer kolonnenartigen Wirbelschichtvorrichtung;
Fig. 3 eine Skizze eines Drehrohrs, Fig. 3 a - d verschiedene Einbauten des Drehrohrs zeigende Querschnittsabbildungen;
Fig. 4 eine Querschnittsskizze einer Fördervorrichtung mit Förderband;
Fig. 5 eine Querschnittsskizze einer Fördervorrichtung mit Drehteller und
Fig. 6 eine Querschnittsskizze eines Wanderbett erzeugenden, senkrechten Rohrs mit fixierten Einbauten.

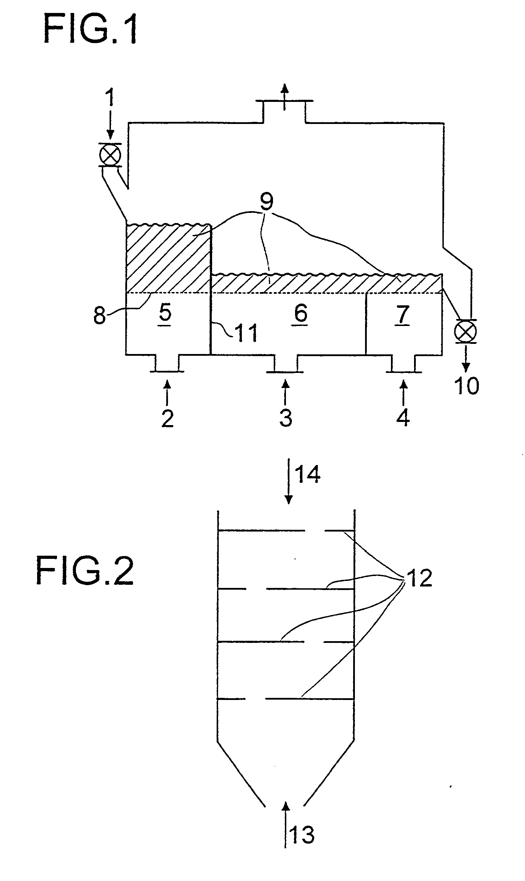

In der in Fig. 1 gezeigten Vorrichtung wird das zu behandelnde Material über die Fülleinrichtung 1 zugeführt. Durch die Zufuhr von Gas an Gaseintrittsstellen 2, 3 und 4 wird in den Zonen 5, 6 und 7 über einem perforierten Boden 8 eine Wirbelschicht 9 erzeugt. Das Material wird in der wandernden Wirbelschicht zur Entladeeinrichtung 10 transportiert ("ähnlich wie Schwebstoffe in einem Fluß"), wobei die Wirbelschicht über ein Hindernis 11 von Zone 5 in Zone 6 abfließt. In den Zonen 5, 6 und 7 liegen vorzugsweise verschiedene physikalische und/oder chemische Bedingungen vor. Beispielsweise wird in Zone 5 unter Zufuhr von heißer Luft das Material erwärmt, in Zone 6 unter Einwirkung eines anderen heißen Gases aktiviert und in Zone 7 unter Zufuhr von kaltem Stickstoff abgekühlt.

In der in Fig. 2 gezeigten, kolonnenartigen Wirbelschichtvorrichtung, sind in einem, in der Regel senkrechten Rohr, durch waagerechte Böden 12 verschiedene Kammern abgetrennt, in denen sich eine Wirbelschicht ausbilden kann. Die Kammern sind durch Öffnungen in den Böden, die in der Regel nicht übereinander liegen, verbunden. Das Trägergas wird durch den Gaseinlaß 13 am unteren Ende der Vorrichtung eingeblasen und im Gegenstrom zu dem zu behandelnden Feststoff geführt, der an einer Stelle 14 im oberen Bereich der Vorrichtung zugeführt wird.

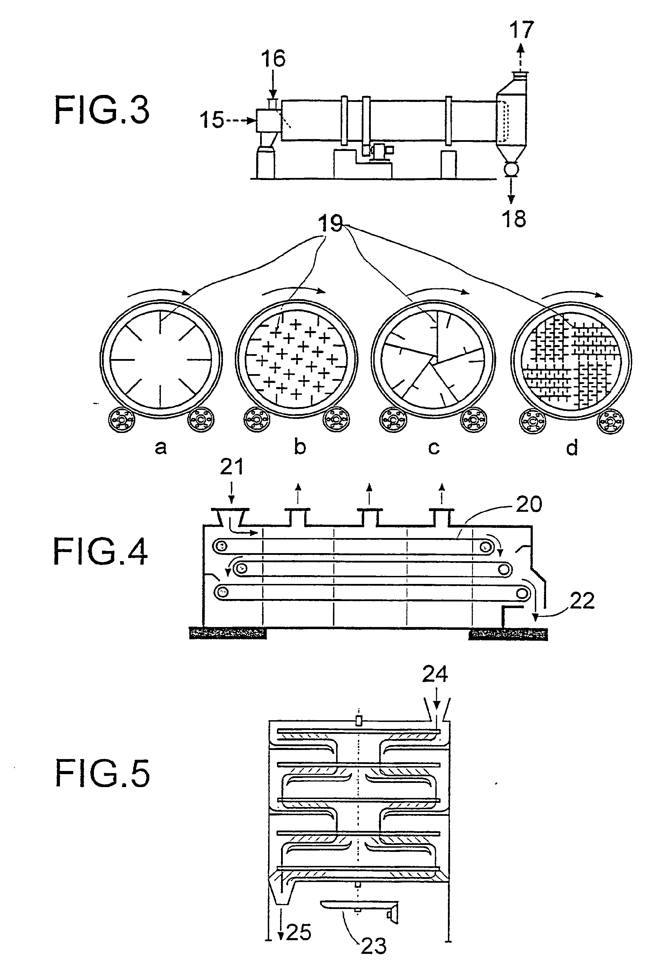

In dem in Fig. 3 gezeigten Drehrohr werden die Partikeln von einem Rohrende mit dem Gaseintritt 15 und der Fülleinrichtung 16 für die Partikeln zu dem anderen Rohrende mit dem Gasaustritt 17 und der Entladeeinrichtung 18 geführt. Dabei kann das Drehrohr mit Einbauten 19 ausgestattet sein, die den kontinuierlichen Transport (ohne Rückvermischung) und eine effektive Quervermischung der Partikeln erleichtern. Innerhalb des Drehrohres können Zonen vorliegen, in denen verschiedene physikalische und/oder chemische Bedingungen herrschen (z.B. ein Temperaturgradient innerhalb der Längsachse des Rohres).

In der in Fig. 4 gezeigten eine Fördervorrichtung werden die Partikeln mittels eines Förderbandes 20 von einer Beladeeinrichtung 21 durch einen Raum zu einer Entladeeinrichtung 22 transportiert. Die Behandlung findet während des Transportvorgangs innerhalb des Raums statt. Dabei können an verschiedenen Stellen Gase in den Raum eingeblasen werden (z.B. im Bereich der Entladeeinrichtung 22 ein kaltes Inertgas zur Abkühlung der Partikeln).

Die in Fig. 5 abgebildete Fördervorrichtung weist einen Drehteller 23 auf, mit dessen Hilfe die Partikeln von der Beladeeinrichtung 24 zu der Entladeeinrichtung 25 transportiert werden, wobei die Partikeln durch die Schwerkraft von höheren Stufen zu tiefer gelegenen Stufen befördert werden. Die Vorrichtung kann beispielsweise von außen beheizt werden.

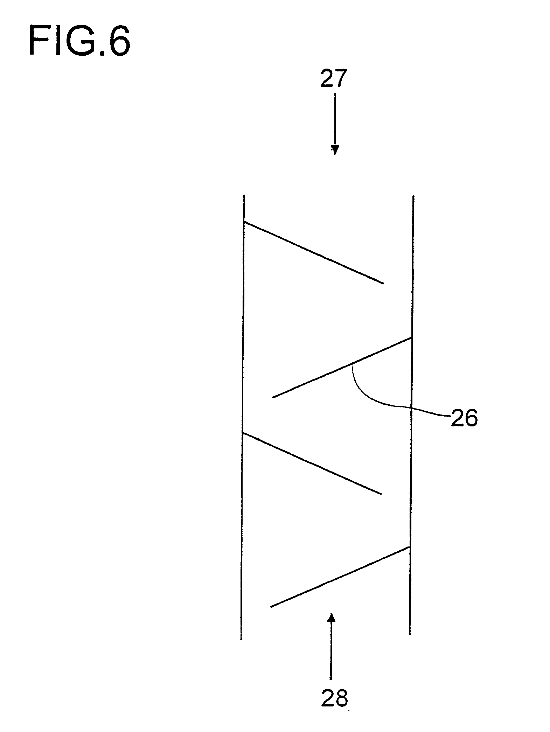

Das in Fig. 6 gezeigte, unbewegliche, senkrechte Rohr enthält fixierte Einbauten 26 (z.B. eingebaute Bleche, die schräg nach unten ausgerichtet sind), die so angeordnet sind, daß Partikeln von einer Beladeeinrichtung 27, im oberen Bereich der Rohrs, nach unten "rutschen" können, wobei gegebenenfalls von einer Stelle 28, die sich bevorzugt im unteren Bereich des Rohrs befindet, ein oder mehrere Gase, im Gegenstrom zu den Partikeln, nach oben geleitet werden können. Dabei liegt ein sogenanntes Wanderbett vor.

Im folgenden wird die Behandlung gemäß dem erfindungsgemäßen Verfahren anhand eines Ausführungsbeispiels näher beschrieben.

### Beispiel (kontinuierliches Verfahren):

Es wird ein Polymerisationskatalysator (0,2 Gew.% Cr(III)(NO₃)₃ auf einem Kieselgel) in einem Drehrohr aktiviert. Dabei wird ein elektrisch aufheizbares Drehrohr mit vorgeschalteter Gasmischstation eingesetzt. Der Polymerisationskatalysator-(Vorstufe) wurde in das auf 600 °C vorgeheizte Drehrohr mittels einer Förderschnecke aus einem Vorlagebehälter direkt in das Drehrohr vorgelegt. Nach Einstellung der Verweilzeit von 2 Stunden wurde das aktivierte Produkt mit Hilfe einer elektromechanischen Neigungsverstelleinrichtung in eine Stickstoff (der Stickstoff hat eine Temperatur von ca. 20 °C) gespülte Vorlage aus dem heißen Apparat entleert. Der Stickstoff wurde dabei im Gegenstrom zu den in die Vorlage fallenden Partikeln geführt (Abkühlungseffekt).

### Vergleichsbeispiel (diskontinuierliches Verfahren):

Der gleiche Polymerisationskatalysator-(Vorstufe) wurde in einem WirbelschichtReaktor aus Quarzglas auf "klassische Art" (diskontinuierliches Verfahren, wie einleitend beschrieben) aktiviert. In dem Reaktor wurden 200 g Polymerisationskatalysator-(Vorstufe) innerhalb 3 Stunden von Raumtemperatur auf 600 °C aufgeheizt, 2 Stunden die Temperatur von 600 °C gehalten und anschließend (unter Stickstoffatmosphäre) über 10 Stunden bis auf Raumtemperatur abgekühlt.

In der nachstehenden Tabelle sind die Partikelgrößenverteilungen, die dem erfindungsgemäßen, kontinuierlichen sowie dem klassischen, diskontinuierlichen Verfahren zugrundeliegen, gegenübergestellt.

**Partikelgrößenverteilungen¹ des Polymerisationskatalysators-(Vorstufe)²**

| Behandlung | Aktivierungsprogramm | Haltetemperatur | Haltezeit | Median µm | < 20,2 µm | < 32 µm | > 80,7 µm |
|---|---|---|---|---|---|---|---|
| unbehandeltes Material² | | | | 60,9 | 0,1 | 1,4 | 7,6 |
| Wirbelschichtverfahren | aufheizenhalten - abkühlen | 600 °C | 2 h | 60,6 | 0,1 | 0,7 | 6,0 |
| Drehrohr (kontinuierlich) | aufheizenhalten - abkühlen | 600 °C | 2 h | 60,7 | 0,1 | 0,9 | 6,2 |

| | | | | | | | |
|---|---|---|---|---|---|---|---|
| ¹Meßmethode: Coulter Counter, Vorbehandlung: 30 s Ultraschall, Elektrolyt: 49,5 % Wasser, 49,5 % Glycerin, 1 % NaCl, Kapillare: 560 µm, Betriebsart: manuell | | | | | | | |
| ²Polymerisationskatalysator-(Vorstufe) enthaltend 0,2 Gew.% Cr(III)(NO₃)₃ auf einem Kieselgel | | | | | | | |

Es zeigt sich, daß die erfindungsgemäße Aktivierung das Katalysator-Material nicht geschädigt hat. Die Partikelgrößenverteilung unterscheidet sich kaum von der Aktivierung nach dem diskontinuierlichen Verfahren.

Anmerkung : Mit Polymerisationskatalysator-(Vorstufe) ist Polymerisationskatalysator gemeint, der aufgrund fehlender Aktivierung noch nicht einsatzfähig ist.

## Patentansprüche

1. Verfahren zur Aktivierung und/oder Kalzinierung von Katalysatoren auf der Basis oxidischer Verbindungen oder oxidischen Katalysatorträgern für die Olefinpolymerisation in einer Vorrichtung, die kontinuierlich auf Temperaturen von 400 bis 800 °C gehalten wird, wobei der Katalysator oder der Katalysatorträger in die Vorrichtung eingeführt, behandelt und aus ihr wieder abgezogen wird, ohne dass dabei Abkühl- und Aufheizperioden in der Vorrichtung anfallen, und der Katalysator oder der Katalysatorträger in der Vorrichtung durch Zonen (5, 6, 7) unterschiedlicher physikalischer und/oder chemischer Bedingungen transportiert wird.

2. Verfahren nach Anspruch 1, **dadurch gekennzeichnet, daß** der Katalysator oder der Katalysatorträger in der Vorrichtung in einer Wirbelschicht (9) behandelt wird.

3. Verfahren nach Anspruch 2, **dadurch gekennzeichnet, daß** die den Katalysator oder Katalysatorträger enthaltende Wirbelschicht (9) in der Vorrichtung durch Zonen (5, 6, 7) befördert wird, in denen verschiedene physikalische und/oder chemische Bedingungen vorliegen.

4. Verfahren nach Anspruch 1, **dadurch gekennzeichnet, daß** der Katalysator oder der Katalysatorträger in Form von Partikeln vorliegt und in der Vorrichtung in einer Schüttung behandelt wird.

5. Verfahren nach Anspruch 4, **dadurch gekennzeichnet, daß** die den Katalysator oder Katalysatorträger enthaltende Schüttung mit Hilfe einer Fördervorrichtung durch Zonen befördert wird, in denen verschiedene physikalische und/oder chemische Bedingungen vorliegen.

6. Verfahren nach Anspruch 5, **dadurch gekennzeichnet, daß** die Fördervorrichtung ein Förderband (20) und/oder ein Drehrohr und/oder einen Drehteller (23) und/oder ein unbewegliches, senkrechtes Rohr mit fixierten Einbauten (26) aufweist.

7. Verfahren nach einem der Ansprüche 1 bis 6, **dadurch gekennzeichnet, daß** die Aktivierung und/oder Kalzinierung bei Temperaturen im Bereich von 500 bis 700 °C über eine Zeitdauer von wenigstens 30 min, vorzugsweise im Bereich von 1 h bis 5 h, durchgeführt wird.

8. Verfahren nach einem der Ansprüche 1 bis 7, **dadurch gekennzeichnet, daß** Flüssigkeiten, zusätzliche Feststoffe und/oder zusätzliche Gase bei der Behandlung eingesetzt werden.

9. Verwendung der in dem Verfahren nach einem der Ansprüche 1 bis 8 behandelten Katalysatoren oder Katalysatorträger zur Herstellung von Polyolefinen, vorzugsweise Polyethylen.

## Claims

1. A method for the activation and/or calcination of catalysts based on oxidic compounds or of oxidic catalyst-supporting materials for olefin polymerization in an apparatus which is continuously maintained at temperatures in the range from 400 to 800°C, the catalyst or catalyst-supporting material being introduced into the apparatus, treated and withdrawn again from the apparatus without cooling and heating periods arising in the apparatus and the catalyst or catalyst-supporting material is transported in the apparatus through zones (5, 6, 7) having different physical and/or chemical conditions.

2. The method according to claim 1, wherein the catalyst or catalyst-supporting material is treated in the apparatus in a fluidized bed (9).

3. The method according to claim 2, wherein the fluidized bed (9) comprising the catalyst or catalyst-supporting material is conveyed in the apparatus through zones (5, 6, 7) in which different physical and/or chemical conditions prevail.

4. The method according to claim 1, wherein the catalyst or catalyst-supporting material is in the form of particles and is treated in the apparatus in a fixed bed.

5. The method according to claim 4, wherein the fixed bed comprising the catalyst or catalyst-supporting material is conveyed with the aid of a conveying device through zones in which different physical and/or chemical conditions prevail.

6. The method according to claim 5, wherein the conveying device has a conveyor belt (20) and/or a revolving tube and/or a turntable (23) and/or a non-moving, vertical tube with fixed internals (26).

7. The method according to one of claims 1 to 6, wherein the activation and/or calcination is carried out at temperatures in the range from 500 to 700°C for a period of at least 30 min and preferably in the range from 1 h to 5 h.

8. The method according to one of claims 1 to 7, wherein liquids, additional solids and/or additional gases are employed in the treatment.

9. The use of a catalyst or catalyst-supporting material treated in the method according to one of claims 1 to 8 for the preparation of polyolefins, preferably polyethylene.

## Revendications

1. Procédé d'activation et / ou de calcination de catalyseurs sur la base de composés par voie d'oxydation ou de supports de catalyseurs par voie d'oxydation pour la polymérisation d'oléfine dans un dispositif, qui est maintenu en continu à des températures de 400 à 800 °C, le catalyseur ou le support de catalyseur étant introduit dans le dispositif, traité puis à nouveau retiré de ce dernier, sans que des périodes de refroidissement ou de réchauffement n'aient lieu dans le dispositif, et le catalyseur ou le support de catalyseur est transporté dans le dispositif à travers des zones (5, 6, 7) de conditions physiques et / ou chimiques différentes.

2. Procédé selon la revendication 1, **caractérisé en ce que** le catalyseur ou le support de catalyseur dans le dispositif est traité dans un lit fluidisé (9).

3. Procédé selon la revendication 2, **caractérisé en ce que** le lit fluidisé (9) - contenant le catalyseur ou le support de catalyseur - dans le dispositif est transporté à travers des zones (5, 6, 7), dans lesquelles il y a différentes conditions physiques et / ou chimiques.

4. Procédé selon la revendication 1, **caractérisé en ce que** le catalyseur ou le support de catalyseur est sous forme de particules et est traité dans le dispositif dans un remplissage.

5. Procédé selon la revendication 4, **caractérisé en ce que** le remplissage contenant le catalyseur ou le support de catalyseur est transporté au moyen d'un dispositif de transport à travers des zones, dans lesquelles il y a différentes conditions physiques et / ou chimiques.

6. Procédé selon la revendication 5, **caractérisé en ce que** le dispositif de transport présente une bande de transport (20) et /ou un tube tournant et /ou un plateau tournant (23) et / ou un tube vertical immobile avec des éléments de montage (26) fixés.

7. Procédé selon l'une des revendications 1 à 6, **caractérisé en ce que** l'activation et / ou la calcination est effectuée à des températures situées dans une plage de 500 à 700 °C pour une durée de temps d'au moins 30 mn, de préférence dans une plage de 1 h à 5 h.

8. Procédé selon l'une des revendications 1 à 7, **caractérisé en ce que** des liquides, des matières solides supplémentaires et / ou des gaz supplémentaires sont utilisés lors du traitement.

9. Utilisation des catalyseurs ou des supports de catalyseurs traités dans le procédé selon l'une des revendications 1 à 8 pour la fabrication de polyoléfines, de préférence de polyéthylènes.
